# EUROPEAN PATENT SPECIFICATION

(11) **EP 2 554 349 B1**
(45) Date of publication and mention of the grant of the patent: **16.09.2015**
(21) Application number: 12178793.1
(22) Date of filing: 01.08.2012
(51) Int. Cl.: B29C 33/10

(54) **Mold venting assembly**
Formentlüftungsvorrichtung
Dispositif de ventilation pour moule

(30) Priority: 03.08.2011 US 201113197290
(43) Date of publication of application: 06.02.2013
(73) Proprietor: The Goodyear Tire & Rubber Company, Akron, OH 44316-0001 (US)
(72) Inventor: Serener-Thielmann, Tayfun, D-65199 Wiesbaden (DE)
(74) Representative: Kutsch, Bernd

(56) References cited:
- WO-A1-01/96091
- KR-B1- 100 873 786
- US-A1- 2003 091 671
- US-A1- 2010 148 031

## Description

### Field of the Invention

The present invention relates to a blocking member for inserting vent bores into molds usable for the manufacture of rubber products such as tires. More particularly, the present invention is directed to a mold which is equipped with one or more such blocking members.

### Background of the Invention

There are generally two types of molds used in the production of rubber articles, such as tires. The first type is the ventless type wherein the mold gases are vented through cracks in the mold surfaces. The second type of mold is the vented type which comprises a plurality of venting bores in which pins or other devices are inserted to block the flow of rubber while venting the mold. The blocking devices allow the air and mold gases to vent while preventing the flow of rubber. Without the blocking devices, tiny spews or rubber shoots form on the surface of the article resulting in a hedge hog appearance.

Prior art blocking devices such as those shown in US-B- 6,561,779 or US-B-7,125,511 may stop the formation of these rubber shoots, but may result in marks on the surface of the tire. Thus it is desired to have an improved blocking device which allows the gases to be vented without the formation of rubber shoots and without marks being formed on the tires.

JP-B2- 4277989 describes a tire mold for enhancing the appearance of the tire. The mold blocking member comprises a tubular hollow body having a cap having an outer dimension greater than the diameter of the tubular hollow body. A similar mold blocking member is also described in EP-A-1 375 105 and US-A-3,374,983.

US-B- 7,125,511 describes a mold blocking member having a sample part body made of two halves which are separated by longitudinal openings which consists of only one piece. A further mold blocking member for use in a tire mold is described in US-B- 6,561,779.

WO-A1-01/96091 describes a degassing device for an injection mold having a top plate with four restrictions and four undercuts, and a tapering shaft.

US-A1-2003/0091671 describes a mold blocking member for a tire mold comprising a central body with clamping ribs and a cap having three restrictions and a central opening.

US-A1-2010/0148031 describes a mold blocking member having a tubular hollow body and a cap having an outer dimension greater than a diameter of the tubular body. The cap has undercuts forming an opening positioned to be adjacent to the mold surface.

### Summary of the Invention

The invention relates to a mold blocking member in accordance with claim 1 and to a mold in accordance with claim 15.

Dependent claims refer to preferred embodiments of the invention.

In one aspect of the present invention, the radial extensions may be arranged symmetrically about the shaft.

In the present invention, the cross-section of the shaft perpendicular to the central axis has the shape of a star.

In another aspect of the present invention, the mold blocking member may consist of only one piece.

In yet another aspect of the present invention, the opening may be positioned such that it is adjacent to a mold surface when the mold blocking member is installed in a vent bore of a mold.

In still another aspect of the present invention, the undercut may form a channel.

In yet another aspect of the present invention, the channel may be adjacent to a mold surface when the mold blocking member is installed in a vent bore of a mold.

In still another example of the present invention, the cap may have a flat outer cap surface or cap plate.

In yet another aspect of the present invention, the mold blocking member may be not flush with the mold surface when the mold blocking member is installed in a vent bore of a mold so that the opening is open to vent mold gases.

In still another aspect of the present invention, the undercut may have a minimum dimension in the range from 0.03 mm to 0.07 mm.

In yet another aspect of the present invention, the undercut may have a substantially rectangular cross-section.

In still another aspect of the present invention, in top view the undercut may have a substantially trapezoidal shape.

In yet another aspect of the present invention, the mold blocking member may comprise a plurality of undercuts.

The maximum diameter of the shaft is a range from 1.0 mm to 5.0 mm, alternatively 1.5 mm to 2.5 mm or 1.5 mm to 2.0 mm or about 1.75 mm.

In yet another example aspect of the present invention, the outer cap surface or cap plate has preferably no holes or openings.

Preferably, the mold blocking member is made from a material selected from the group consisting of aluminum die cast, sinter metal material, hard ceramic material, titanium nitride, carbon nitride, boron nitride, zirconium nitride, silicon nitride, silicon carbide, titanium carbide, boron carbide, zirconium carbide, zirconium oxide and titanium oxide. The use of a sinter metal or a ceramic material allows it to use the porosity of such materials to support the venting of a mold. To this end, the porosity may be adjusted during the manufacturing of the respective material in such a way that it provides a sufficient porosity to support the venting of the mold when using the mold blocking members.

In yet another aspect of the present invention, the shaft may be tapered from the first end to the second end.

In still another aspect of the present invention, the shaft may have a taper angle in a range from 0.3 to 2.0 degrees, alternatively 0.5 to 1.0 degrees.

In yet another aspect of the present invention, the maximum diameter of the shaft at the first end may be larger than the maximum diameter of the shaft at the second end. The difference in diameter may be in the range from 20 µm to 100 µm, alternatively from 30 µm to 70 µm or about 50 µm.

In still another aspect of the present invention, the radial ends of the extensions or the radial ends of the spikes of the star may each comprise a barb. The barbs extend like a fin from the shaft for securing the mold blocking member in a vent bore in a mold.

In yet another aspect of the present invention, the star may be a three-pointed star, a symmetric three-pointed star. Alternatively, the star may be a four-pointed star, a symmetric four-pointed star, a five-pointed star, a symmetric five-pointed star, a six-pointed star, a symmetric six-pointed star, or even an eight-pointed star.

In still another aspect of the present invention, the cap may have a circular shape or an elliptical shape with the central axis extending through the center of gravity of the cap.

In yet another aspect of the present invention, the radial ends of the extensions of the shaft or the radial ends of the spikes of the star may have a triangular cross-section.

In still another aspect of the present invention, the mold blocking member may comprise a plurality of undercuts. The number of undercuts may correspond to the number of spikes of the star.

In yet another aspect of the present invention, the mold blocking member may comprise a plurality of undercuts which are located along the circumference of the cap. The undercuts may be arranged symmetrically between the spikes of the star.

The present invention also relates to a mold comprising a vent bore wherein such mold blocking member are inserted into the vent bore. The mold may comprise a plurality of vent bores with such mold blocking members inserted into each of these vent bores. The mold blocking members may be press fit into the mold.

One advantage of the mold blocking member in accordance with the present invention is that it is easy to manufacture and significantly cheaper than prior art mold blocking members.

Another advantage is that the central shaft is located below the center of gravity of the cap which avoids or reduces a bending or arching of the cap during tire manufacturing when a rubber material is inserted into the tire mold. Such rubber pressures the cap, which may lead to a bending or arching of the cap, in the direction of the vent bore over time, i.e., many production cycles. Such bending however often results in a bending up of the edges of the cap over time, i.e., the openings may widen so that over time rubber may enter. In this case, the mold blocking member may separate from the mold when a tire is removed from the mold after curing. Furthermore, rubber may obstruct these openings so that the venting of the mold is less effective or even locally blocked. Finally, rubber in the openings may create undesired spews on the surface of the molded tire which may affect tire appearance.

Still another advantage of the mold blocking member in accordance with the present invention is that its relatively massive shaft reliably secures the mold blocking member in the vent bore of a tire mold. This means less extracted mold blocking members after typically 50 molding cycles, which again means less cost for replacement mold blocking members and, even more importantly, less maintenance cost.

Yet another advantage of the mold blocking member in accordance with the present invention is that the shaft may be manufactured with a low diameter such as in a range of less than 3.0 mm, or even less than 2.0 mm, so that the mold blocking member is also suitable for being inserted in respectively small vent bores. This is of particular importance in the manufacturing of winter tires having tread profiles with high blading.

### Brief Description of the Drawings

The present invention will be described by way of example and with reference to the accompanying drawings in which:
FIG. 1 is a perspective view of a mold blocking device for insertion into a vent bore or a tire mold;
FIG. 2 is a side view of the blocking device of Figure 1;
FIG. 3 is the blocking device of Figure 1 in top view onto the shaft; and
FIG. 4 is a cross-sectional view of a part of a tire mold with the blocking device of Fig. 1 inserted in a mold bore of the mold.

### Detailed Description of an Example of the Present Invention

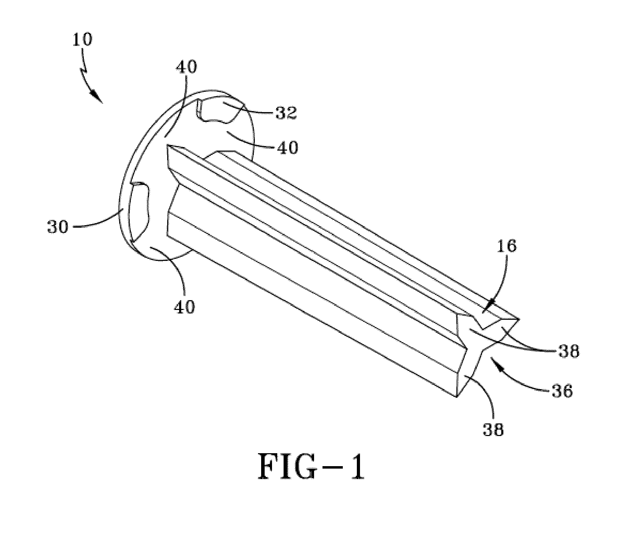

Figure 1 illustrates a mold blocking member 10 of the present invention. The blocking member 10 comprises a longitudinal body or shaft 20 having a first end 12 with a cap 30 connected thereto. The shaft 20 may be tapered from a first end 12 to a second end 16. The shaft 20 further comprises optional barbs 9 which extend like fins from the shaft and function to secure the blocking device 10 in a vent bore 43 of a mold 50 such as a tire mold to prevent pullout during demolding. The shaft 20 extends along a central axis 35. The cross-section of the shaft 20 perpendicular to the central axis 35 has three radial extensions or spikes 38. The first end 12 with the cap 30 has a maximum diameter greater than the maximum diameter of the shaft 20. The cap 30 comprises three undercuts 40 for forming three respective openings 41 when the mold blocking member 10 is inserted into the mold 50.

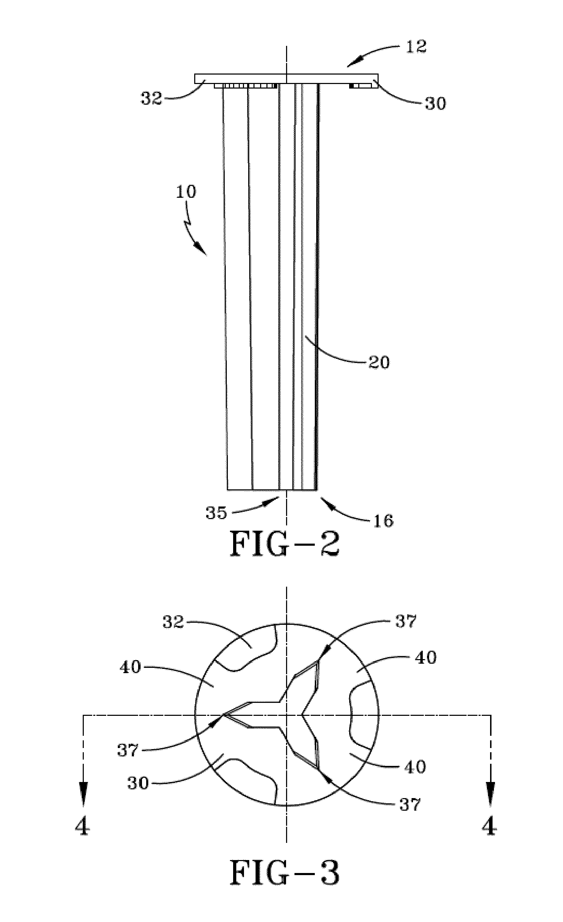

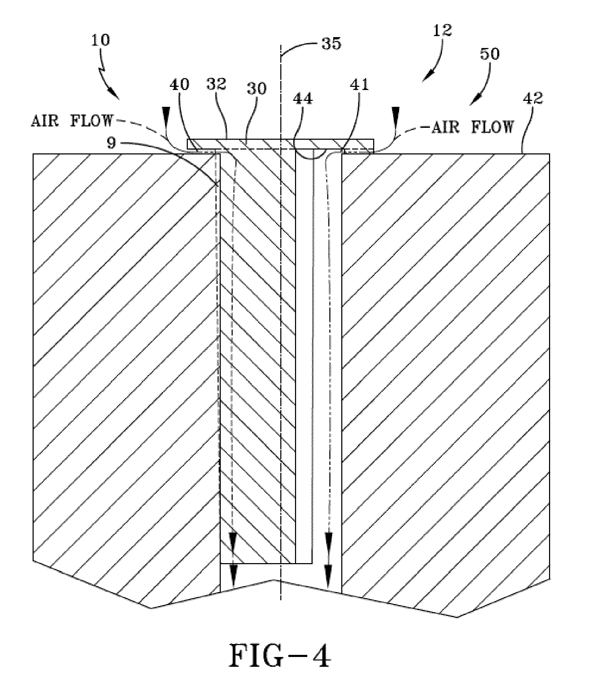

As shown in Fig. 1 and Fig. 3, the cross-section of the shaft 20 perpendicular to the central axis 35 has the shape of a star 36. The mold blocking member 10 may consist of only one piece. The mold blocking member 10 may be configured such that it is not flush with the mold surface when the mold blocking member 10 is installed in the vent bore 43 of the mold 50 so that the openings 41 are open to vent mold gases. The diameter of the shaft is in a range from 1.0 mm to 5.0 mm, alternatively 1.5 mm to 2.5 mm or 1.5 mm to 2.0 mm, such as about 1.5 mm. The mold blocking 10 is made from a material selected from the group consisting of aluminum die cast, sinter metal material, hard ceramic material, titanium nitride, carbon nitride, boron nitride, zirconium nitride, silicon nitride, silicon carbide, titanium carbide, boron carbide, zirconium carbide, zirconium oxide and titanium oxide. The material may be steel or a sinter metal. The shaft 20 may be tapered from the first end 12 to the second end 16 and may have a taper angle in a range from 0.3 to 2.0 degrees, alternatively 0.5 to 1.0 degrees, such as 1.0 degree. The maximum diameter of the shaft 20 at the first end 12 may be larger than the maximum diameter shaft 20 at the second end 16. The difference in diameter may be in the range from 20 µm to 100 µm, alternatively from 30 µm to 70 µm, such as about 50 µm. The radial ends 37 of the extensions or spikes 38 may each comprise a barb 9 extending like a fin from the shaft 20 for better securing the mold blocking member 10 in the vent bore 43. The shape of the star 36 may be a symmetric three-pointed star 36 as shown in Fig. 1 and Fig. 3. It may however also be a four-pointed star such as a symmetric four-pointed star, a five-pointed star such as a symmetric five-pointed star, a six-pointed star such as a symmetric six-pointed star or an eight-pointed star. The cap plate 32 may have a circular shape. It may also have an elliptical shape. The central axis 35 may extend through the center of gravity of the cap plate 32. The cap 30 may be formed by a thin cap plate 32, the peripheral contour of which may be round. It may however also be oval or non-round. The outer surface of cap plate 32 may be flat while the inner surface of cap plate 32 may have a plurality of undercuts 40 forming openings 41 having the shape of channels 44 as shown in Fig. 4 when the mold blocking member 10 is inserted into the vent bore 43 of the tire mold 50. The channels 44 or openings 41 may be rectangular in shape and may have a channel height in the range of 0.03 mm to 0.07 mm, or 25% to 50% of the cap plate thickness. The cap plate thickness may be 0.07 to 0.20 mm thick, or about 0.15 mm thick. The outer surface of cap plate 32 may have no slit openings or holes. Figure 4 illustrates a side view of the blocking device 10 inserted into a mold bore 43 (or vent bore) wherein the cap 30 is not flush with the outer mold surface. The outer surface of the cap 30 slightly protrudes above the inner surface of the mold so that the channels 44 are open to vent any trapped mold gases. As shown in Figure 4, the trapped mold gases travel 90 degrees down the side of the cap 30 and then bend another 90 degrees into channels 40. The double bend of the flow path acts as a labyrinth in order to block the rubber from flowing past the cap.

## Claims

1. A mold blocking member for use in a vent bore of a mold for the manufacture of a rubber article, the mold blocking member (10) comprising a shaft (20) extending along a central axis (35) having a first end (12) and a second end (16), wherein the cross-section of the shaft (20) perpendicular to the central axis (35) comprises at least three substantially radial extensions (38) from the shaft (20), wherein the first end (12) has a cap (30) having a maximum diameter greater than the maximum diameter of the shaft (20), and wherein the cap (30) comprises at least one undercut (40) for forming an opening (41), **characterized in that** the cross-section of the shaft (20) perpendicular to the central axis (35) has the shape of a star and the maximum diameter of the shaft (20) is within a range from 1.0 mm to 5.0 mm.

2. The mold blocking member of claim 1 consisting of only one piece.

3. The mold blocking member of claim 1 or 2 wherein the undercut (40) forms a channel which is adjacent to a mold surface when the mold blocking member is installed in a vent bore of a mold.

4. The mold blocking member of at least one of the previous claims wherein of the mold blocking member (10) is configured such that it is not flush with the mold surface when the mold blocking member is installed in a vent bore of a mold so that the opening (41) is open to vent mold gases.

5. The mold blocking member of at least one of the previous claims wherein the undercut (40) has a minimum dimension in the range from 0.03 mm to 0.07 mm.

6. The mold blocking member of claim 1 wherein in a side view of the cap (30) the undercut (40) has a substantially rectangular cross-section and/or wherein in top view onto the undercut (40) the undercut has a substantially rectangular or trapezoidal shape.

7. The mold blocking member of at least one of the previous claims wherein the maximum diameter of the shaft (20) is within a range from 1.5 mm to 2.5 mm.

8. The mold blocking member of at least one of the previous claims wherein the maximum diameter of the shaft (20) is within a range from 1.5 mm to 2.0 mm or is about 1.75 mm.

9. The mold blocking member of at least one of the previous claims wherein an outer cap surface or cap plate has no holes or openings.

10. The mold blocking member of at least one of the previous claims wherein
(i) the shaft (20) is tapered from the first end (12) to the second end (16) and has a taper angle in a range from 0.3 to 2.0 degrees, alternatively from 0.5 to 1.0 degrees; and/or
(ii) the maximum diameter of the shaft (20) at the first end (12) is larger than the maximum diameter of the shaft (20) at the second end (16) and wherein the difference in diameter is preferably in a range of from 20 µm to 100 µm, alternatively from 30 µm to 70 µm or about 50 µm.

11. The mold blocking member of at least one of the previous claims wherein the radial ends of the extensions (38) each comprise a barb extending like a fin from the shaft (20) for securing the mold blocking member in a vent bore in a mold.

12. The mold blocking member of claim 1 wherein the star is selected from the group consisting of a three-pointed star, a symmetric three-pointed star, a four-pointed star, a symmetric four-pointed star, a five-pointed star, a symmetric five-pointed star, a six-pointed star, and a symmetric six-pointed star.

13. The mold blocking member of at least one of the previous claims wherein the cap (30) has a circular shape or an elliptical shape and wherein the central axis (35) extends through the center of gravity of the cap (30).

14. The mold blocking member of at least one of the previous claims comprising a plurality of undercuts (40), wherein
(i) the number of undercuts (40) preferably corresponds to the number of radial extensions (38) from the shaft (20); and/or
(ii) wherein the undercuts (40) are arranged circumferentially along the cap (30) and wherein the undercuts (40) are arranged symmetrically between the radial extensions (38) from the shaft (20).

15. A mold comprising a plurality of vent bores wherein a mold blocking member is inserted into each of these vent bores, and wherein at least one of said mold blocking members, a majority of said mold blocking member or all of said mold blocking members are mold blocking members in accordance with at least one of the previous claims.

## Patentansprüche

1. Formblockierelement zur Anwendung in einer Entlüftungsbohrung einer Form zur Herstellung eines Kautschukartikels, wobei das Formblockierelement (10) einen sich entlang einer Mittelachse (35) erstreckenden Schaft (20) mit einem ersten Ende (12) und einem zweiten Ende (16) aufweist, wobei der Querschnitt des Schafts (20) senkrecht zu der Mittelachse (35) mindestens drei im Wesentlichen radiale Verlängerungen (38) von dem Schaft (20) umfasst, wobei das erste Ende (12) eine Kappe (30) mit einem Höchstdurchmesser, der größer als der Höchstdurchmesser des Schafts (20) ist, aufweist, und wobei die Kappe (30) mindestens einen Unterschnitt (40) zur Bildung einer Öffnung (41) umfasst, **dadurch gekennzeichnet, dass** der Querschnitt des Schafts (20) senkrecht zur Mittelachse (35) die Form eines Sterns aufweist und der Höchstdurchmesser des Schafts (20) im Bereich von 1,0 mm bis 5,0 mm liegt.

2. Formblockierelement nach Anspruch 1, das nur aus einem Stück besteht.

3. Formblockierelement nach Anspruch 1 oder 2, wobei der Unterschnitt (40) einen Kanal bildet, der einer Formoberfläche benachbart ist, wenn das Formblockierelement in einer Entlüftungsbohrung einer Form angebracht ist.

4. Formblockierelement nach mindestens einem der vorhergehenden Ansprüche, wobei das Formblockierelement (10) so eingerichtet ist, dass es nicht bündig zu der Formoberfläche ist, wenn das Formblockierelement in einer Entlüftungsbohrung einer Form angebracht ist, sodass die Öffnung (41) offen ist, um Formgase zu entlüften.

5. Formblockierelement nach mindestens einem der vorhergehenden Ansprüche, wobei der Unterschnitt (40) eine Mindestabmessung im Bereich von 0,03 mm bis 0,07 mm aufweist.

6. Formblockierelement nach Anspruch 1, wobei in einer Seitenansicht der Kappe (30) der Unterschnitt (40) einen im Wesentlichen rechteckigen Querschnitt aufweist und/oder wobei in Draufsicht auf den Unterschnitt (40) der Unterschnitt eine im Wesentlichen rechteckige oder Trapezform aufweist.

7. Formblockierelement nach mindestens einem der vorhergehenden Ansprüche, wobei der Höchstdurchmesser des Schafts (20) im Bereich von 1,5 mm bis 2,5 mm liegt.

8. Formblockierelement nach mindestens einem der vorhergehenden Ansprüche, wobei der Höchstdurchmesser des Schafts (20) im Bereich von 1,5 mm bis 2,0 mm liegt oder ungefähr 1,75 mm beträgt.

9. Formblockierelement nach mindestens einem der vorhergehenden Ansprüche, wobei eine äußere Kappenoberfläche oder Kappenplatte keine Löcher oder Öffnungen aufweist.

10. Formblockierelement nach mindestens einem der vorhergehenden Ansprüche, wobei
(i) der Schaft (20) von dem ersten Ende (12) bis zu dem zweiten Ende (16) verjüngt ist und einen Verjüngungswinkel im Bereich von 0,3 bis 2,0 Grad, alternativ von 0,5 bis 1,0 Grad, aufweist; und/oder
(ii) der Höchstdurchmesser des Schafts (20) an dem ersten Ende (12) größer als der Höchstdurchmesser des Schafts (20) an dem zweiten Ende (16) ist, und wobei der Unterschied im Durchmesser bevorzugt im Bereich von 20 µm bis 100 µm, alternativ von 30 µm bis 70 µm oder ungefähr bei 50 µm liegt.

11. Formblockierelement nach mindestens einem der vorhergehenden Ansprüche, wobei die radialen Enden der Verlängerungen (38) jedes einen Widerhaken umfassen, der sich wie eine Finne von dem Schaft (20) erstreckt, zur Sicherung des Formblockierelements in einer Entlüftungsbohrung in einer Form.

12. Formblockierelement nach Anspruch 1, wobei der Stern aus einer Gruppe ausgewählt ist, bestehend aus einem Stern mit drei Zacken, einem symmetrischen Stern mit drei Zacken, einem Stern mit vier Zacken, einem symmetrischen Stern mit vier Zacken, einem Stern mit fünf Zacken, einem symmetrischen Stern mit fünf Zacken, einem Stern mit sechs Zacken und einem symmetrischen Stern mit sechs Zacken.

13. Formblockierelement nach mindestens einem der vorhergehenden Ansprüche, wobei die Kappe (30) kreisförmig oder elliptisch ist und wobei die Mittelachse (35) sich durch das Schwerkraftzentrum der Kappe (30) erstreckt.

14. Formblockierelement nach mindestens einem der vorhergehenden Ansprüche, umfassend eine Vielzahl von Unterschnitten (40), wobei
(i) die Anzahl von Unterschnitten (40) bevorzugt der Anzahl radialer Verlängerungen (38) von dem Schaft (20) entspricht; und/oder
(ii) wobei die Unterschnitte (40) in Umfangsrichtung entlang der Kappe (30) angeordnet sind und wobei die Unterschnitte (40) symmetrisch zwischen den radialen Verlängerungen (38) von dem Schaft (20) angeordnet sind.

15. Form, umfassend eine Vielzahl von Entlüftungsbohrungen, wobei ein Formblockierelement in jede dieser Entlüftungsbohrungen eingesetzt wird und wobei mindestens eines dieser Formblockierelemente, eine Mehrheit der Formblockierelemente oder alle der Formblockierelemente Formblockierelemente gemäß mindestens einem der vorhergehenden Ansprüche ist bzw. sind.

## Revendications

1. Membre de verrouillage de moule pour son utilisation dans un alésage d'aération dans un moule pour la fabrication d'un article en caoutchouc, le membre de verrouillage de moule (10) comprenant un arbre (20) s'étendant le long d'un axe central (35) possédant une première extrémité (12) et une deuxième extrémité (16), dans lequel la section transversale de l'arbre (20) en direction perpendiculaire par rapport à l'axe central (35) comprend au moins trois prolongements essentiellement radiaux (38) à partir de l'arbre (20), dans lequel la première extrémité (12) possède un capuchon (30) possédant un diamètre maximal qui est supérieur au diamètre maximal de l'arbre (20), et dans lequel le capuchon (30) comprend au moins une contre-dépouille (40) pour former une ouverture (41), **caractérisé en ce que** la section transversale de l'arbre (20) en direction perpendiculaire par rapport à l'axe central (35) possède la configuration d'une étoile et le diamètre maximal de l'arbre (20) se situe dans la plage de 1,0 mm à 5,0 mm.

2. Membre de verrouillage de moule selon la revendication 1, constitué d'une seule pièce.

3. Membre de verrouillage de moule selon la revendication 1 ou 2, dans lequel la contre-dépouille (40) forme un canal qui est adjacent à une surface de moule lorsque le membre de verrouillage de moule est monté dans un alésage d'aération d'un moule.

4. Membre de verrouillage de moule selon au moins une des revendications précédentes, dans lequel le membre de verrouillage de moule (10) est configuré de façon à ne pas venir se disposer à fleur avec la surface de moule lorsque le membre de verrouillage de moule est monté dans un alésage d'aération d'un moule, si bien que l'ouverture (41) est ouverte pour évacuer les gaz du moule.

5. Membre de verrouillage de moule selon au moins une des revendications précédentes, dans lequel la contre-dépouille (40) possède une dimension minimale dans la plage de 0,03 mm à 0,07 mm.

6. Membre de verrouillage de moule selon la revendication 1, dans lequel, dans une vue latérale du capuchon (30), la contre-dépouille (40) possède une section transversale essentiellement rectangulaire et/ou dans lequel, dans une vue de sommet de la contre-dépouille (40), la contre-dépouille possède une configuration essentiellement rectangulaire ou trapézoïdale.

7. Membre de verrouillage de moule selon au moins une des revendications précédentes, dans lequel le diamètre maximal de l'arbre (20) se situe dans la plage de 1,5 mm à 2,5 mm.

8. Membre de verrouillage de moule selon au moins une des revendications précédentes, dans lequel le diamètre maximal de l'arbre (20) se situe dans la plage de 1,5 mm à 2,0 mm ou s'élève à environ 1,75 mm.

9. Membre de verrouillage de moule selon au moins une des revendications précédentes, dans lequel une surface externe de capuchon ou une plaque externe de capuchon ne possède aucun trou ou aucune ouverture.

10. Membre de verrouillage de moule selon au moins une des revendications précédentes, dans lequel :
(i) l'arbre (20) prend une forme tronconique depuis la première extrémité (12) jusqu'à la deuxième extrémité (16) et possède un angle de conicité qui se situe dans la plage de 0,3 à 2,0 degrés, en variante de 0,5 à 1,0 degré ; et/ou
(ii) le diamètre maximal de l'arbre (20) à la première extrémité (12) est supérieur au diamètre maximal de l'arbre (20) à la deuxième extrémité (16), et dans lequel la différence en ce qui concerne le diamètre se situe de préférence dans la plage de 20 µm à 100 µm, en variante de 30 µm à 70 µm ou s'élève à environ 50 µm.

11. Membre de verrouillage de moule selon au moins une des revendications précédentes, dans lequel les extrémités radiales des prolongements (38) comprennent chacune une barbe qui s'étend à la manière d'une ailette à partir de l'arbre (20) pour fixer le membre de verrouillage de moule dans un alésage d'aération dans un moule.

12. Membre de verrouillage de moule selon la revendication 1, dans lequel l'étoile est choisie parmi le groupe constitué par une étoile à trois branches, une étoile symétrique à trois branches, une étoile à quatre branches, une étoile symétrique à quatre branches, une étoile à cinq branches, une étoile symétrique à cinq branches, une étoile à six branches, une étoile symétrique à six branches.

13. Membre de verrouillage de moule selon au moins une des revendications précédentes, dans lequel le capuchon (30) possède une configuration circulaire ou une confirmation elliptique, et dans lequel l'axe central (35) s'étend en passant par le centre de gravité du capuchon (30).

14. Membre de verrouillage de moule selon au moins une des revendications précédentes comprenant plusieurs contre-dépouilles (40), dans lequel :
(i) le nombre de contre-dépouilles (40) correspond de préférence au nombre de prolongements radiaux (38) à partir de l'arbre (20) ; et/ou
(ii) dans lequel les contre-dépouilles (40) sont arrangées en direction circonférentielle le long du capuchon (30) et dans lequel les contre-dépouilles (40) sont arrangées de manière symétrique entre les prolongements radiaux (30) à partir de l'arbre (20).

15. Moule comprenant plusieurs alésages d'aération, dans lequel un membre de verrouillage de moule est inséré dans chacun de ces alésages d'aération, et dans lequel au moins un desdits membres de verrouillage de moule, la majeure partie desdits membres de verrouillage de moule ou la totalité desdits membres de verrouillage de moule représentent des membres de verrouillage de moule conformément à au moins une des revendications précédentes.
